(19) Europäisches Patentamt
European Patent Office
Office européen des brevets

(11) EP 4 373 142 A1

(12) **EUROPEAN PATENT APPLICATION**
published in accordance with Art. 153(4) EPC

(43) Date of publication:
**22.05.2024 Bulletin 2024/21**

(21) Application number: **22841137.7**

(22) Date of filing: **21.06.2022**

(51) International Patent Classification (IPC):
***H04W 4/40*** *(2018.01)*

(52) Cooperative Patent Classification (CPC):
**G01S 19/37; H04W 4/40; H04W 56/00**

(86) International application number:
**PCT/CN2022/100099**

(87) International publication number:
**WO 2023/284497 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2021 CN 202110800778**

(71) Applicant: **CICT Connected and Intelligent
Technologies Co., Ltd.
Chongqing 400041 (CN)**

(72) Inventors:
• **WANG, Peng
Chongqing 400040 (CN)**
• **ZHOU, Haijun
Chongqing 400040 (CN)**
• **FANG, Jiayi
Chongqing 400040 (CN)**

(74) Representative: **Studio Torta S.p.A.
Viale Antonio Silvani, 6
40122 Bologna (IT)**

(54) **SYNCHRONIZATION METHOD AND APPARATUS, AND TERMINALS**

(57) A synchronization method, a synchronization device and a terminal are provided, and relate to the field of Internet of Vehicles technology. The synchronization method is used for a first terminal, and includes: receiving, by the first terminal, first synchronization signaling transmitted by at least one second terminal in the case that the first terminal is in a first synchronization state; and performing, by the first terminal, a synchronization operation in accordance with the first synchronization signaling, and the first terminal switching to a second synchronization state.

Fig. 1

EP 4 373 142 A1

**Description**

**CROSS-REFERENCE TO RELATED APPLICATION**

This application claims the priority of the Chinese patent application No. 202110800778.0 filed in China on July 15, 2021, which is incorporated herein by reference in its entirety.

**TECHNICAL FIELD**

The present disclosure relates to the field of Internet of Vehicles (IoV), in particular to a synchronization method, a synchronization device, and a terminal.

**BACKGROUND**

When a vehicle is located in a complex environment such as an urban canyon, a flyover, a viaduct, an underground parking lot or a tunnel, it may not be able to receive a satellite signal, and thereby may not perform time synchronization in accordance with the satellite signal. An internal clock of an IoV device has insufficient accuracy to meet the requirement on high-precision time synchronization for a long time period. In the related art, for a Sidelink synchronization signal, there is currently no practicable scheme which meets an industrial standard. In addition, under distributed IoV architecture, it is difficult to achieve synchronization among a huge number of terminals.

**SUMMARY**

An object of the present disclosure is to provide a synchronization method, a synchronization device and a terminal, so as to solve the problem in the related art where it is difficult to achieve synchronization among IoV terminals under distributed IoV architecture.

In one aspect, the present disclosure provides in some embodiments a synchronization method for a first terminal, including: receiving, by the first terminal, first synchronization signaling transmitted by at least one second terminal in the case that the first terminal is in a first synchronization state; and performing, by the first terminal, a synchronization operation in accordance with the first synchronization signaling, and the first terminal switching to a second synchronization state.

Optionally, the receiving the first synchronization signaling transmitted by the at least one second terminal includes receiving the first synchronization signaling carried on a Physical Sidelink Shared Channel (PSSCH).

Optionally, the synchronization method further includes receiving first indication information carried on a Physical Sidelink Control Channel (PSCCH), and the first indication information is used to indicate whether the first synchronization signaling is carried on the PSSCH.

Optionally, the performing, by the first terminal, the synchronization operation in accordance with the first synchronization signaling and the first terminal switching to the second synchronization state includes, when received power of the at least one PSSCH carrying the first synchronization signaling is greater than or equal to a first threshold value, performing, by the first terminal, the synchronization operation, and the first terminal switching to the second synchronization state.

Optionally, the synchronization method further includes, in the case that the first terminal is in an out-of-synchronization state, receiving second synchronization signaling that is carried on a Physical Sidelink Broadcast Channel (PSBCH) and transmitted by at least one third terminal, and the first terminal switching to the first synchronization state or maintaining in the out-of-synchronization state.

Optionally, the synchronization method further includes, in the case that the first terminal is in the second synchronization state, determining that a first part of a synchronization level of the first terminal is a first value.

Optionally, the synchronization method further includes: in the case that a synchronization source of the first terminal is a Global Navigation Satellite System (GNSS) signal, determining that a second part of the synchronization level of the first terminal is a second value; and/or in the case that a value of a second part of a synchronization level carried in the first synchronization signaling transmitted by the synchronization source of the first terminal is n, determining that the second part of the synchronization level of the first terminal is n+1, where $n \geq 0$ and n is an integer.

Optionally, the synchronization method further includes: in the case that the first terminal is in the second synchronization state, receiving the first synchronization signaling carried on at least one PSSCH; and performing, by the first terminal, the synchronization operation in accordance with the first synchronization signaling carried on the PSSCH. Received power of the at least one PSSCH is greater than or equal to a second threshold value.

Optionally, the first synchronization signaling includes at least one of: a first part of a synchronization level; a second part of the synchronization level; a Sidelink radio frame number; a sidelink subframe number; a Universal Time Coordinated (UTC); a first timing offset, the first timing offset being a timing offset of a terminal transmitting the first synchronization signaling relative to a reference time; an Identity (ID) of the terminal transmitting the first synchronization signaling; a first timing adjustment value, the first timing adjustment value being an adjustment value when synchronization is performed between the terminal transmitting the first synchronization signaling and a synchronization source of the terminal; or a second timing offset and an ID of a terminal corresponding to the second timing offset, the second timing offset being a timing offset of the terminal transmitting the first synchronization signaling relative to another terminal.

Optionally, the performing, by the first terminal, the synchronization operation includes: determining, in accordance with the received first synchronization signaling, a third timing offset of the first terminal relative to the terminal transmitting the first synchronization signaling; determining the second timing adjustment value of the first terminal when the first synchronization signaling is being received; determining, in accordance with the second timing offset, the first timing adjustment value, the second timing adjustment value and the third timing offset, an real timing offset of the first terminal relative to the terminal transmitting the first synchronization signaling; and performing, by the first terminal, the synchronization operation in accordance with the real timing offset.

Optionally, the determining, in accordance with the second timing offset, the first timing adjustment value, the second timing adjustment value and the third timing offset, the real timing offset of the first terminal relative to the terminal transmitting the first synchronization signaling includes calculating the real timing offset of the first terminal relative to the terminal transmitting the first synchronization signaling through

$$Rt_{xy} = \frac{\left(Ta_{xy} - Ta_{yx} - Td_x + Td_y - \Delta t_{xy} + \Delta t_{yx}\right)}{2}$$

, where x represents the first terminal, y represents the terminal transmitting the first synchronization signaling, $Rt_{xy}$ represents the real timing offset of the first terminal relative to the terminal transmitting the first synchronization signaling, $Ta_{yx}$ represents the second timing offset, $Ta_{xy}$ represents the third timing offset, $Td_x$ represents the second timing adjustment value, $Td_y$ represents the first timing adjustment value, $\Delta t_{yx}$ represents a timing measurement error of the terminal transmitting the first synchronization signaling, and $\Delta t_{xy}$ represents a timing measurement error of the first terminal.

Optionally, the performing, by the first terminal, the synchronization operation includes: determining, in accordance with the received first synchronization signaling, a third timing offset of the first terminal relative to the terminal transmitting the first synchronization signaling; obtaining the first timing offset and the first timing adjustment value in the first synchronization signaling; determining an offset of the first terminal relative to the reference time in accordance with the third timing offset, the first timing offset and the first timing adjustment value; and performing, by the first terminal, the synchronization operation in accordance with the offset of the first terminal relative to the reference time.

Optionally, the synchronization method further includes, in the case that the first terminal is in the second synchronization state and a first condition has been met, performing, by the first terminal, the synchronization operation, and the first terminal switching to the first synchronization state. The first condition includes that a GNSS signal fails to be received within a first time period; that the first synchronization signaling carried on a PSSCH fails to be received within a second time period; and that the second synchronization signaling carried on at least one PSBCH is received within a third time period and received power of the at least one PSBCH is greater than or equal to a third threshold value.

Optionally, the synchronization method further includes, in the case that the first terminal is in the first synchronization state or the second synchronization state, a GNSS signal fails to be received within a fourth time period, the first synchronization signaling carried on a PSSCH fails to be received within a fifth time period and the second synchronization signaling carried on a PSBCH fails to be received within a sixth time period, the first terminal switches to an out-of-synchronization state.

Optionally, the synchronization method further includes: in the case that the first terminal is in an out-of-synchronization state or the first synchronization state and a GNSS signal has been received, performing, by the first terminal, synchronization with the GNSS signal, and the first terminal switching to the second synchronization state; or in the case that the first terminal is in the second synchronization state and the GNSS signal has been received, performing, by the first terminal, synchronization with the GNSS signal.

In another aspect, the present disclosure provides in some embodiments a terminal, the terminal being a first terminal, and including a transceiver, a memory, a processor, and a computer program stored in the memory and used to be executed by the processor. The processor is configured to execute the computer program to implement the above-mentioned synchronization method.

In yet another aspect, the present disclosure provides in some embodiments a synchronization device for a first terminal, including: a first reception module configured to receive first synchronization signaling transmitted by at least one second terminal in the case that the first terminal is in a first synchronization state; and a first synchronization module configured to perform a synchronization operation in accordance with the first synchronization signaling, and enable the first terminal to be switched to a second synchronization state.

In still yet another aspect, the present disclosure provides in some embodiments a computer-readable storage medium storing therein a computer program. The computer program is used to be executed by a processor to implement the above-mentioned synchronization method.

The present disclosure at least has the following beneficial effect.

According to the synchronization method in the embodiments of the present disclosure, in the case that the first terminal is in the first synchronization state, the first terminal receives the first synchronization signaling transmitted by the at least one second terminal, performs the synchronization operation in accordance with the first synchronization signaling, and then switches to the second synchronization state. Accordingly, the first terminal performs the synchronization operation in accordance with the received first synchronization signaling, so as to switch from the first synchronization state to the second synchronization state. As a result, it is able to solve the problem in the related art where it is difficult to perform the synchronization among IoV terminals under IoV distributed architecture, and improve the synchronization accuracy of the first terminal.

**BRIEF DESCRIPTION OF THE DRAWINGS**

Fig. 1 is a flow chart of a synchronization method according to an embodiment of the present disclosure;

Fig. 2 is a schematic view showing timing adjustment within a gap between transmissions of synchronization signaling according to an embodiment of the present disclosure;

Fig. 3 is a schematic view showing the transmission of the synchronization signaling according to an embodiment of the present disclosure;

Fig. 4 is a schematic view showing a situation where a first terminal switches among an out-of-synchronization state, a first synchronization state and a second synchronization state according to an embodiment of the present disclosure;

Fig. 5 is a schematic view showing a first scenario in which the synchronization method is applied according to an embodiment of the present disclosure;

Fig. 6 is a schematic view showing a second scenario in which the synchronization method is applied according to an embodiment of the present disclosure;

Fig. 7 is a block diagram of a synchronization device according to an embodiment of the present disclosure; and

Fig. 8 is a block diagram of a terminal according to an embodiment of the present disclosure.

**DETAILED DESCRIPTION**

In order to make the objects, the technical solutions and the advantages of the present disclosure more apparent, the present disclosure will be described hereinafter in conjunction with the drawings and embodiments. In the following description, specific details of configurations and assemblies are merely provided to facilitate the understanding of the present disclosure. It should be appreciated that, a person skilled in the art may make further modifications and alternations without departing from the spirit of the present disclosure. In addition, for clarification, any known function and structure will not be described hereinafter.

It should be further appreciated that, such phrases as "one embodiment" and "an embodiment" intend to indicate that the features, structures or characteristics are contained in at least an embodiment of the present disclosure, rather than referring to a same embodiment. In addition, the features, structures or characteristics may be combined in any embodiment or embodiments in an appropriate manner.

It should be appreciated that, the following serial numbers do not refer to the order of the steps. Actually, the order shall be determined in accordance with functions and internal logic of the steps, but shall not be construed as limiting the implementation in any form.

It should be further appreciated that, the expression "B corresponding to A" means that B is related to A and may be determined in accordance with A. It should be further appreciated that, in the case that B is determined in accordance with A, it means that B may be determined in accordance with A and/or any other information.

Some concepts will be described hereinafter at first.

As a key IoV technology, high-precision time synchronization is related to security during the running of a vehicle as well as the security of the other traffic participants and the development of various IoV applications. Principal synchronization resources of an IoV device include GNSS, 5th-Generation (5G) Mobile Communication Technology generated NodeB (gNB)/evolved NodeB (eNB), the other IoV devices, and internal clocks in the other IoV devices. However, when the vehicle is located in a complex environment such as an urban canyon, a flyover, a viaduct, an underground parking lot or a tunnel, it may not be able to receive a satellite signal, and thereby perform time synchronization in accordance with the satellite signal. An internal clock of an IoV device has insufficient accuracy to meet the requirement on high-precision time synchronization for a long time period. Hence, an unsynchronized IoV device needs to obtain a time synchronization signal through the other synchronized IoV device. In addition, currently an Orthogonal Frequency Division Multiplexing (OFDM) modulation technology is mainly used in the IoV for communication, and generally accurate time synchronization is required in an OFDM system to maintain orthogonality between carriers.

Currently, in a synchronization scheme defined in the 3rd-Generation Partnership Project (3GPP), there are mainly two kinds of synchronization signals, i.e., a Sidelink Synchronization Signal (SLSS) for synchronization on time and frequency, and a Master Information Block SL (MIB-SL) for providing the other information. The SLSS includes Primary Sidelink Synchronization Signal (PSSS) and Secondary Sidelink Synchronization Signal (SSSS).

The MIB-SL is transmitted through a PSBCH, and it carries inCoverage which indicates whether a synchronization signal transmitting device is within a coverage of a cell, and directFrameNumber and directSubFrameNumber which indicate a frame number and a subframe number respectively in the case that the device is in the coverage. When a User Equipment (UE, also called as terminal) transmits the SLSS and MIB-SL, it must select parameters and determine a corresponding subframe. In order to facilitate the processing of the subframes in a resource pool for service transmission, physical subframes determined in accordance with a System Frame Number (SFN) are mapped into logical subframes in the form of a synchronized bitmap. The following three kinds of subframes need to be excluded from the physical subframes to obtain the logic subframes: 1) all Downlink (DL) subframes and special subframes when a PCS interface and a Uu interface (which are both communication interfaces) share a Time Division Duplex (TDD) carrier; 2) a synchronization subframe for transmitting the SLSS and the PSBCH, with a synchronization period of 160ms as defined in a protocol; and 3) a reserved subframe.

In an SFN period (10240ms), after excluding the subframes 1) and 2), the remaining subframes are ranked in an ascending order of indices thereof, and marked as $(1_0, 1_1, \ldots 1_{(10240-N_{slss}-N_{dssf}-1)})$, where $N_{slss}$ represents the quantity of subframes configured as SLSS resources in the 10240 subframes, and $N_{dssf}$ represents the total quantity of DL subframes and special subframes in the 10240 subframes when Sidelink transmission occurs in a TDD cellular cell. Based on bitmap mapping, the subframes in the SFN period which are not evenly divisible by bitmap are called as reserved subframes, and the quantity of reserved subframes is calculated through $N_{reserved} = (10240-N_{slss} - N_{dssf})\bmod L_{bitmap}$, where $N_{reserved}$ represents the quantity of reserved subframes, and $L_{bitmap}$ represents a bitmap length configured at a high layer.

$$r = \left\lceil \frac{m \cdot \left(10240 - N_{slss} - N_{dssf}\right)}{N_{reserved}} \right\rceil$$

Then, the reserved subframes are evenly distributed in the SFN through , where $m=0,\ldots, N_{reserved}-1$.

Through excluding the above-mentioned three kinds of subframes, the remaining subframes in the SFN/Direct Frame Number (DFN) period may be used to transmit a Vehicle-to-Everything (V2X) service. In the resource pool configuration, the logic subframes are indicated in the form of bitmap using a time-domain indication method, and as speculated in the protocol, the bitmap length is any value of 16, 20 or 100.

In the related art, when the bitmap length is 100, the quantity of reserved subframes is 40 and the period is 256ms. In addition, as speculated in the industrial standard, a Road-side Unit (RSU) transmits, in accordance with its own capability, the Sidelink synchronization signal within subframes which are not configured for transmitting a V2X message, and these subframes at least include the reserved subframes.

In the related art, for the Sidelink synchronization signal, there is currently no practicable scheme which meets the industrial standard. In addition, under distributed IoV architecture, it is difficult to achieve synchronization among a huge number of terminals.

An object of the present disclosure is to provide a synchronization method, a synchronization device and a terminal, so as to solve the above-mentioned problem.

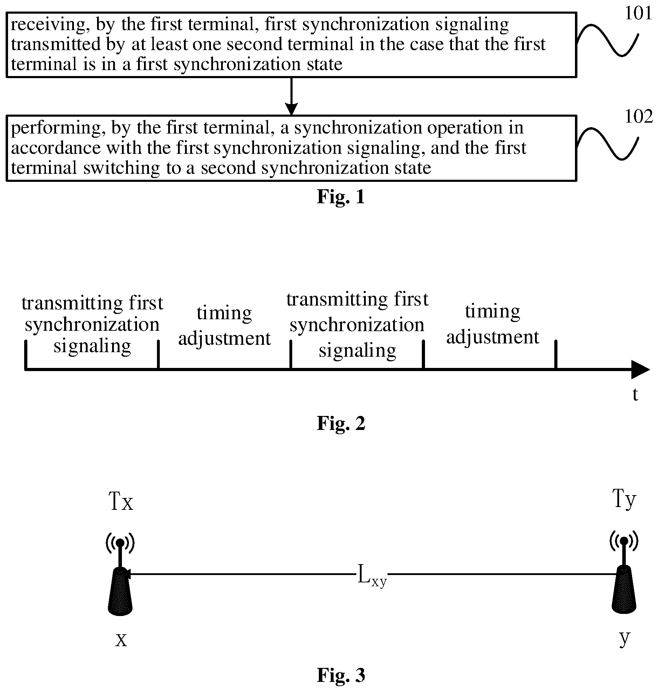

As shown in Fig. 1, the present disclosure provides in some embodiments a synchronization method for a first terminal, which includes: Step 101 of receiving, by the first terminal, first synchronization signaling transmitted by at least one second terminal in the case that the first terminal is in a first synchronization state; and Step 102 of performing, by the first terminal, a synchronization operation in accordance with the first synchronization signaling, and the first terminal switching to a second synchronization state.

Here, it should be appreciated that, the first terminal and the second terminal are both IoV devices. For example, the first terminal is an On Board Unit (OBU) and the second terminal is a Road Side Unit (RSU). The first synchronization signaling in the embodiments of the present disclosure may be a synchronization message. The first synchronization state and the second synchronization state may be synchronization states of the terminal having different synchronization accuracy levels. For example, an accuracy level of the first synchronization state is lower than an accuracy level of the second synchronization state.

According to the synchronization method in the embodiments of the present disclosure, in the case that the first terminal is in the first synchronization state, the first terminal receives the first synchronization signaling transmitted by the at least one second terminal, performs the synchronization operation in accordance with the first synchronization signaling, and then switches to the second synchronization state. The first terminal performs the synchronization operation in accordance with the received first synchronization signaling so as to switch from the first synchronization state to the second synchronization state. As a result, it is able to achieve time synchronization between the IoV devices in the case of no coverage of a satellite signal, solve the problem in the related art where it is difficult to perform the synchronization among IoV terminals under IoV distributed architecture, and improve the synchronization accuracy of the first terminal.

As an optional implementation, Step 101 of receiving the first synchronization signaling transmitted by the at least one second terminal includes receiving the first synchronization signaling carried on a PSSCH.

The synchronization method further includes receiving first indication information carried on a PSCCH, and the first indication information is used to indicate whether the first synchronization signaling is carried on the PSSCH.

In other words, in the embodiments of the present disclosure, the first synchronization signaling is transmitted in two ways. In a first way, the first synchronization signaling is carried on the PSSCH; and in a second way, the first synchronization signaling is carried on the PSSCH and the first indication information is carried on the PSCCH. The first indication information is used to indicate whether the first synchronization signaling is carried on the PSSCH.

To be specific, as speculated in the industrial standard, Sidelink Control Information (SCI) uses an SCI format 1, in which at least 7 bits are currently left as filling bits. Hence, optionally, any bit of the filling bits in the SCI in the PSCCH is used to indicate whether the first synchronization signaling is carried on the PSSCH. For example, when the bit for indicating whether the first synchronization signaling is carried on the PSSCH has a value of 1, it means that the first synchronization signaling is carried on the PSSCH indicated through the PSCCH.

As an optional implementation, Step 102 of performing, by the first terminal, the synchronization operation in accordance with the first synchronization signaling and the first terminal switching to the second synchronization state includes, when received power of the at least one PSSCH carrying the first synchronization signaling is greater than or equal to a first threshold value, performing, by the first terminal, the synchronization operation, and the first terminal switching to the second synchronization state.

In the embodiments of the present disclosure, when the first terminal performs the synchronization operation, at first it determines a synchronization source of the first terminal in accordance with the received first synchronization signaling carried on the at least one PSSCH, and then performs synchronization with the currently-determined synchronization source. To be specific, the synchronization source of the first terminal is determined in accordance with the received power of the at least one PSSCH carrying the first synchronization signaling. For example, when the received power of the PSSCHs carrying the first synchronization signaling transmitted by the synchronization source of the first terminal is greater than the first threshold value, a plurality of PSSCHs whose received power is greater than the first threshold value is selected from the received PSSCHs carrying the first synchronization signaling, and then the synchronization source of the first terminal is determined in accordance with the selected PSSCHs. Further, a terminal which transmits the PSSCH having a highest synchronization level in the selected PSSCHs carrying the first synchronization signaling is selected as the synchronization source of the first terminal.

In other words, the performing, by the first terminal, the synchronization operation specifically includes performing, by the first terminal, synchronization with a first PSSCH, the first PSSCH is a PSSCH carrying the first synchronization signal, received power of the first PSSCH is greater than or equal to the first threshold value, and the first PSSCH has a highest synchronization level in the plurality of PSSCHs whose received power is greater than or equal to the first threshold value.

As an optional implementation, the synchronization method further includes, in the case that the first terminal is in an out-of-synchronization state, receiving second synchronization signaling carried on a PSBCH transmitted by at least one third terminal, and the first terminal switching to the first synchronization state or maintaining in the out-of-synchronization state.

Here, it should be appreciated that, in the embodiments of the present disclosure, when the first terminal is in the out-of-synchronization state and the second synchronization signaling carried on the PSBCH, rather than a GNSS signal, has been received, the first terminal performs the synchronization operation in accordance with the second synchronization signaling carried on the PSBCH, and the first terminal switches to the first synchronization state or maintains in the out-of-synchronization state.

Here, it should be appreciated that, the second synchronization signaling is used to indicate a synchronization level of the third terminal, and the second synchronization signaling includes indication information indicating whether the third terminal is within a GNSS coverage and an index of a Sidelink synchronization signal.

The description about the implementation thereof will be given hereinafter.

In the case that the first terminal is in the out-of-synchronization state, the GNSS signal fails to be received and the second synchronization signaling carried on the PSBCH has been received, the first terminal determines whether received power of the PBSCH carrying the second synchronization signaling is greater than or equal to a fourth threshold value. When the received power is greater than or equal to the fourth threshold value, the first terminal performs the synchronization operation in accordance with the PSBCH carrying the second synchronization signaling, and the first terminal switches from the out-of-synchronization state to the first synchronization state. When the received power is smaller than the fourth threshold value, the first terminal maintains in the out-of-synchronization state.

To be specific, the first terminal performs the synchronization operation as follows. The first terminal performs synchronization with the third terminal transmitting a first PSBCH, the first PSBCH is a PSBCH carrying the second synchronization signaling, received power of the first PSBCH is greater than or equal to the fourth threshold value, and the first PSBCH has a highest synchronization level among a plurality of PSBCHs whose received power is greater than or equal to the fourth threshold value.

Here, it should be appreciated that, in the embodiments of the present disclosure, the first synchronization signaling and the second synchronization signaling are different types of signaling, rather than same signaling.

In addition, it should be further appreciated that, in the case that the first terminal is in the out-of-synchronization state and the GNSS signal and the second synchronization signaling carried on the PSBCH fail to be received, the first terminal is maintained in the out-of-synchronization state.

Further, in the case that the synchronization level of the terminal transmitting the second synchronization signaling carried on the PSBCH is a first synchronization level or a second synchronization level, the PSBCH carrying the second synchronization signaling is transmitted within a reserved subframe. For example, 40 reserved subframes of one radio subframe are indexed in a chronological order, the second synchronization signaling for a synchronization level 1 is transmitted within the odd-numbered reserved subframes, and the second synchronization signaling for a synchronization level 2 is transmitted within the even-numbered reserved subframes.

As an optional implementation, the synchronization method further includes, in the case that the first terminal is in the second synchronization state, determining that a first part of a synchronization level of the first terminal is a first value.

Here, it should be appreciated that, in the embodiments of the present disclosure, the first terminal may be an RSU. In other words, in the case that the RSU is in the second synchronization state, the first part of the synchronization level of the RSU is the first value, e.g., 1.

In this case, in the second synchronization signaling transmitted by the first terminal and carried on the PSBCH, inCoverage is a third value, e.g., 1, and SLSS ID is a fourth value, e.g., 0.

Here, it should be appreciated that, inCoverage is just the indication information in the second synchronization signaling, and SLSS ID is just an index of the Sidelink synchronization signal.

In another possible embodiment of the present disclosure, the synchronization method further includes: in the case that a synchronization source of the first terminal is a GNSS signal, determining that a second part of the synchronization level of the first terminal is a second value, e.g., 0; and/or in the case that a value of a second part of a synchronization level carried in the first synchronization signaling transmitted by the synchronization source of the first terminal is n, determining that the second part of the synchronization level of the first terminal is n+1, where n≥0 and n is an integer.

For example, the synchronization level of the first terminal is expressed in a format of "a.b", where a represents the first part of the synchronization level, and b represents the second part of the synchronization level. To be specific, in the case that the first terminal is in the second synchronization state and the synchronization source is the GNSS signal, the synchronization level of the first terminal is expressed as 1.0. In the case that the first terminal is in the second synchronization state and the second part of the synchronization level carried in the first synchronization signaling from the synchronization source is 2, the synchronization level of the first terminal is expressed as 1.3.

Here, it should be further appreciated that, in the case that the first terminal (e.g., the RSU) is in the first synchronization state, and a transmitting terminal indicated through the second synchronization signaling received by the first terminal and carried on the PSBCH has a synchronization level of m, and the first terminal performs synchronization with the terminal transmitting the PSBCH carrying the second synchronization signaling, the first terminal has a synchronization level of m+1. For example, when m is 1, the synchronization level of the first terminal is 2, and the synchronization level indicated through the second synchronization signaling transmitted by the first terminal and carried on the PBSCH is 2. To be specific, in the second synchronization signaling transmitted by the first terminal and carried on the PSBCH, inCoverage is a fifth value, e.g., 0, and SLSS ID is a sixth value, e.g., 0. When m is 2, the first terminal has a synchronization level of 3, and the first terminal does not transmit the second synchronization signaling carried on the PSBCH.

In addition, it should be further appreciated that, in the case that the first terminal is an OBU, the synchronization level of the first terminal is defined as follows. When the first terminal does not transmit any synchronization signaling, the first terminal does not have a synchronization level. When the first terminal transmits the second synchronization signaling carried on the PSBCH and the synchronization source of the first terminal is the GNSS signaling, the synchronization level of the first terminal is the first synchronization level (i.e., the synchronization level 1). At this time, in the second synchronization signaling transmitted by the first terminal and carried on the PSBCH, inCoverage is 1 and SLSS ID is 0. When the first terminal transmits the second synchronization signaling carried on the PSBCH, and the synchronization source of the first terminal is an RSU or the first part of the synchronization level of the synchronization source indicated through the second synchronization signaling transmitted by the synchronization source and carried on the PSBCH is 1 or the synchronization level is 1, the synchronization level of the first terminal is the second synchronization level (i.e., the synchronization level 2). At this time, in the second synchronization signaling transmitted by the first terminal and carried on the PSBCH, inCoverage is 0 and SLSS ID is 0. When the synchronization level indicated through the second synchronization signaling received by the first terminal and carried on the PSBCH is the second synchronization level, the synchronization level of the first terminal is a third synchronization level (i.e., a synchronization level 3). At this time, the first terminal does not transmit any synchronization signaling.

As an optional implementation, the synchronization method further includes: in the case that the first terminal is in the second synchronization state, receiving the first synchronization signaling carried on at least one PSSCH; and performing, by the first terminal, the synchronization operation in accordance with the first synchronization signaling carried on the PSSCH. Received power of the at least one PSSCH is greater than or equal to a second threshold value.

To be specific, in the embodiments of the present disclosure, the performing, by the first terminal, the synchronization operation in accordance with the first synchronization signaling carried on the PSSCH includes determining the synchronization source of the first terminal in accordance with the received first synchronization signaling carried on the at least one PSSCH, and performing, by the first terminal, synchronization with the currently-determined synchronization source. To be specific, the synchronization source of the first terminal may be determined in accordance with the received power of the at least one PSSCH carrying the first synchronization signaling. For example, when the received power of the PSSCHs carrying the first synchronization signaling and transmitted by the synchronization source of the first terminal is greater than or equal to the second threshold value, a plurality of PSSCHs whose received power is greater than the second threshold value is selected from the PSSCHs carrying the first synchronization signaling, and then the synchronization source of the first terminal is determined in accordance with the selected PSSCHs. Further, in the selected PSSCHs carrying the first synchronization signaling, the terminal which transmits the PSSCH having a highest synchronization level is selected as the synchronization source of the first terminal.

In other words, the first terminal performs the synchronization operation as follows. The firs terminal performs synchronization with a second PSSCH, the second PSSCH is a PSSCH carrying the first synchronization signaling, received power of the second PSSCH is greater than or equal to the second threshold value, and the second PSSCH has a highest synchronization level in the PSSCHs whose received power is greater than or equal to the second threshold value.

In other words, in the case that the first terminal is in the second synchronization state, the first terminal performs the synchronization operation in accordance with the first synchronization signaling carried on the PSSCH, so that the first terminal maintains in the second synchronization state.

As an optional implementation, the first synchronization signaling includes at least one of: a first part of a synchronization level; a second part of the synchronization level; a Sidelink radio frame number; a sidelink subframe number; a UTC; a first timing offset, the first timing offset being a timing offset of a terminal transmitting the first synchronization signaling relative to a reference time; an ID of the terminal transmitting the first synchronization signaling; a first timing adjustment value, the first timing adjustment value being an adjustment value when synchronization is performed between the terminal transmitting the first synchronization signaling and a synchronization source of the terminal; or a second timing offset and an ID of a terminal corresponding to the second timing offset, the second timing offset being a timing offset of the terminal transmitting the first synchronization signaling relative to another terminal.

In the embodiments of the present disclosure, the first timing adjustment value is used by the terminal transmitting the first synchronization signaling for the adjustment within a gap between the transmissions of the first synchronization signaling. Fig. 2 shows a sequence relationship between the transmission of the first synchronization signaling and the timing adjustment.

The radio frame number and the subframe number corresponding to the first synchronization signaling are used to achieve synchronization at a millisecond level.

For example, the first synchronization signaling is expressed in the following format.

| Synchronization level | Radio frame number and subframe number or UTC | First timing offset | ID | First timing adjustment value | Inter-RSU timing offset and corresponding RSU IDs |
|---|---|---|---|---|---|

Here, it should be appreciated that, in the above-mentioned format, a content in the field of synchronization level includes the first part and/or the second part of the synchronization level, a content in the field of radio frame number and subframe number or UTC includes at least one of the Sidelink radio frame number, the Sidelink subframe number or the UTC, a content in the field of ID includes an ID of the terminal transmitting the first synchronization signaling, and a content in the field of inter-RSU timing offset and the corresponding RSU IDs includes the second timing offset and the IDs of the terminals corresponding to the second timing offset.

Here, it should be further appreciated that, the first timing adjustment value is a timing adjustment value when the terminal transmitting the first synchronization signaling performs synchronization with the synchronization source within a previous synchronization period, and the previous synchronization period is a synchronization period before the transmission of the first synchronization signaling. The second timing offset is a timing offset of the terminal transmitting the first synchronization signaling relative to N neighboring terminals transmitting synchronization signaling and monitored by the terminal transmitting the first synchronization signaling, and the IDs of the terminals corresponding to the second timing offset include corresponding N RSU IDs.

As an optional implementation, the performing, by the first terminal, the synchronization operation includes: determining, in accordance with the received first synchronization signaling, a third timing offset of the first terminal relative to the terminal transmitting the first synchronization signaling; determining the second timing adjustment value of the first terminal when the first synchronization signaling is being received; determining, in accordance with the second timing offset, the first timing adjustment value, the second timing adjustment value and the third timing offset, an real timing offset of the first terminal relative to the terminal transmitting the first synchronization signaling; and performing, by the first terminal, the synchronization operation in accordance with the real timing offset.

Here, it should be appreciated that, in the embodiments of the present disclosure, the first terminal is an RSU.

More specifically, the determining, in accordance with the second timing offset, the first timing adjustment value, the second timing adjustment value and the third timing offset, the real timing offset of the first terminal relative to the terminal transmitting the first synchronization signaling includes calculating the real timing offset of the first terminal relative to the terminal transmitting the first synchronization signaling through

$$Rt_{xy} = \frac{\left(Ta_{xy} - Ta_{yx} - Td_x + Td_y - \Delta t_{xy} + \Delta t_{yx}\right)}{2}$$

, where x represents the first terminal, y represents the terminal transmitting the first synchronization signaling, $Rt_{xy}$ represents the real timing offset of the first terminal relative to the terminal transmitting the first synchronization signaling, $Ta_{yx}$ represents the second timing offset, $Ta_{xy}$ represents the third timing offset, $Td_x$ represents the second timing adjustment value, $Td_y$ represents the first timing adjustment value, $\Delta t_{yx}$ represents a timing measurement error of the terminal transmitting the first synchronization signaling, and $\Delta t_{xy}$ represents a timing measurement error of the first terminal.

Illustratively, the transmission and measurement of the timing offset between the RSUs will be described as follows.

As shown in Fig. 3, a propagation distance between an RSUx (i.e., Tx in Fig. 3) and an RSUy (i.e., Ty in Fig. 3) is $L_{xy}$, timing offsets of the RSUx and RSUy relative to the reference clock are $T_{x,i-1}$ and $T_{y,i-1}$ respectively at a time point i-1, a relative timing offset measured by the RSUy in accordance with the first synchronization signaling received from the RSUx is $Ta_{yx,i-1}$, timing offsets of the RSUx and RSUy relative to the reference clock are $T_{x,i}$ and $T_{y,i}$ respectively at a time point i after the timing adjustment $Td_{x,i-1}$ and $Td_{y,i-1}$, and a relative timing offset measured by the RSUx in accordance with the first synchronization signaling received from the RSUy is $Ta_{xy,i}$. At this time,

$$Ta_{yx,i-1} = T_{y,i-1} - T_{x,i-1} + \frac{L_{xy}}{c} + \Delta t_{yx,i-1}$$

, and

$$Ta_{xy,i} = T_{x,i} - T_{y,i} + \frac{L_{xy}}{c} + \Delta t_{xy,i} = \left(T_{x,i-1} - Td_{x,i-1}\right) - \left(T_{y,i-1} - Td_{y,i-1}\right) + \frac{L_{xy}}{c} + \Delta t_{xy,i}$$

, where $\Delta t_{yx,i-1}$ and $\Delta t_{yx,i}$ are timing measurement errors determined by the RSUy and the RSUx, and c represents velocity of light.

In actual use, the RSUy is stationary relative to the RSUx, and $Ta_{xy,i}$ actually approximates to $Ta_{yx,i-1}$. $T_{x,i} = T_{x,i-1} - Td_{x,i-1}$ and $T_{y,i} = T_{y,i-1} - Td_{y,i-1}$, so $T_{x,i-1} = T_{x,i} + Td_{x,i-1}$ and $T_{y,i-1} = T_{y,i} + Td_{y,i-1}$. Hence, a real offset between $T_{x,i}$ and $T_{y,i}$ is

$$Rt_{xy,i} = T_{x,i} - T_{y,i} = \frac{Ta_{xy,i} - Ta_{yx,i-1} - Td_{x,i-1} + Td_{y,i-1} - \Delta t_{xy,i} + \Delta t_{yx,i-1}}{2}$$

calculated through .

Based on the above-mentioned formula, through transmitting the timing offset between the RSUs and the timing adjustment value of the RSU in the first synchronization signaling, it is able to obtain the real timing offset between the RUSs, thereby to achieve the synchronization between the RSUs, eliminates the influence of the propagation distance

$L_{xy}$ between the RSUs on the timing offset, and improve the synchronization accuracy between the RSUs.

In another possible embodiment of the present disclosure, the performing, by the first terminal, the synchronization operation includes: determining, in accordance with the received first synchronization signaling, a third timing offset of the first terminal relative to the terminal transmitting the first synchronization signaling; determining, by the first terminal, a second timing adjustment value of the first terminal when the first synchronization signaling is being received; and calculating an actual timing offset of the first terminal relative to the terminal transmitting the first synchronization signaling in accordance with the third timing offset, the second timing adjustment value and a difference between the second timing offset and the first timing adjustment value.

Based on the above, when the difference between the second timing offset and the first timing adjustment value, rather than the second timing offset and the first timing adjustment value, is transmitted by the terminal transmitting the first synchronization signaling, the first terminal may still obtain the real timing offset relative to the first terminal.

To be specific, the real timing offset is calculated through

$$Rt_{xy} = \frac{Ta_{xy} - Ta'_{yx} - Td_x - \Delta t_{xy} + \Delta t_{yx}}{2}$$

, where

$Ta'_{yx}$ represents the difference between the second timing offset and the first timing adjustment value, x represents the first terminal, y represents the terminal transmitting the first synchronization signaling, $Rt_{xy}$ represents the real timing offset of the first terminal relative to the second terminal, i.e., the terminal transmitting the first synchronization signaling, $Ta_{xy}$ represents the third timing offset, $Td_x$ represents the second timing adjustment value, $\Delta t_{yx}$ represents a timing measurement error of the terminal transmitting the first synchronization signaling, and $\Delta t_{xy}$ represents a timing measurement error of the first terminal.

It should be appreciated that, $$Rt_{xy} = \frac{Ta_{xy} - Ta'_{yx} - Td_x - \Delta t_{xy} + \Delta t_{yx}}{2}$$ is derived as follows. Presumed that $$Ta'_{xy,i} = Ta_{xy,i} - Td_{x,i}$$ and $$Ta'_{yx,i} = Ta_{yx,i} - Td_{y,i}$$, so $$Ta_{xy,i} = T_{x,i} - T_{y,i} + \frac{L_{xy}}{c} + \Delta t_{xy,i}$$

$$= \left(T_{x,i-1} - Td_{x,i-1}\right) - \left(T_{y,i-1} - Td_{y,i-1}\right) + \frac{L_{xy}}{c} + \Delta t_{xy,i} \qquad = T_{x,i-1} - T_{y,i-1} + \frac{L_{xy}}{c} + \Delta t_{xy,i} - Td_{x,i-1} + Td_{y,i-1}$$

$$= Ta'_{xy,i-1} + Td_{y,i-1}$$

$Ta_{xy,i-1}$  $-Td_{x,i-1}$  $+Td_{y,i-1}$  $Rt_{xy,i}$  $=T_{x,i}$  $-T_{y,i}$

$$= \frac{Ta_{xy,i} - Ta_{yx,i-1} - Td_{x,i-1} + Td_{y,i-1} - \Delta t_{xy,i} + \Delta t_{yx,i-1}}{2} \qquad = \frac{Ta_{xy,i} - Td_{x,i-1} - Ta'_{yx,i-1} - \Delta t_{xy,i} + \Delta t_{yx,i-1}}{2}$$ .

Based on the above, when the difference between the second timing offset and the first timing adjustment value, rather than the second timing offset and the first timing adjustment value, is transmitted by the terminal transmitting the first synchronization signaling, the second terminal may still obtain the real timing offset relative to the first terminal.

Further, it should be appreciated that, each RSU is synchronized with its synchronization source RSU. Due to a measurement error and a crystal oscillator error, there usually exists an offset between the synchronization source and the reference time. When the RSU is adjusted to be synchronized with the synchronization source, sometimes false adjustment inconsistent with the reference clock occurs, and errors in multiple levels of synchronization adjustment are accumulated. When the offset between the RSU and the reference clock is directly obtained, it is able to effectively reduce the probability of the false adjustment as well as the accumulated error.

To be specific, $T_x$ represents the relative timing offset of the RSUx relative to the reference time, and $Rt_{yx}$ represents the real offset of the RSUy relative to the RSUx, so the relative timing offset $Rt_y$ of the RSUy relative to the

$$= T_x + \frac{Ta_{yx} - Ta_{xy} + Td_x - Td_y + \Delta t_{xy} - \Delta t_{yx}}{2}$$

reference time is calculated through $Rt_y = T_x - Td_x + Rt_{yx}$ .

Based on the above, on the premise that the propagation delay between the RSUs is eliminated and the synchronization is achieved between the RSUs, each RSU periodically broadcasts its offset relative to the reference time, so it is able for the RSU to perform the timing adjustment on the basis of the reference time, thereby to effectively reduce the probability of the false adjustment as well as the accumulated error in the multiple levels of synchronization adjustment.

As an optional implementation, the performing, by the first terminal, the synchronization operation includes: determining, in accordance with the received first synchronization signaling, a third timing offset of the first terminal relative to the terminal transmitting the first synchronization signaling; obtaining the first timing offset and the first timing adjustment value in the first synchronization signaling; determining an offset of the first terminal relative to the reference time in accordance with the third timing offset, the first timing offset and the first timing adjustment value; and performing, by the first terminal, the synchronization operation in accordance with the offset of the first terminal relative to the reference time.

Here, it should be appreciated that, in the embodiments of the present disclosure, the first terminal may be an OBU. Based on the above, it is able for the OBU to adjust a local clock in accordance with the offset relative to the reference time, thereby to achieve the synchronization of the OBU.

In addition, in the case that the first terminal is an OBU and the first synchronization signaling transmitted by the RSU through the PSSCH merely includes the synchronization level, the UTC, the first timing offset and the first timing adjustment value, the OBU performs synchronization with the PSSCH having a highest synchronization level. When the first timing offset is $T$, the first timing adjustment value is $Td$, and the OBU receives the first synchronization signaling carried on the PSSCH and measures a timing offset $Rt$ relative to the synchronization source RSU, a time offset of the OBU relative to the UTC is $T + Td + Rt$. The OBU adjusts the local time in accordance with the time offset relative to the UTC, so as to complete the synchronization.

As an optional implementation, the synchronization method further includes, in the case that the first terminal is in the second synchronization state and a first condition has been met, performing, by the first terminal, the synchronization operation, and the first terminal switching to the first synchronization state. The first condition includes that a GNSS signal fails to be received within a first time period; that the first synchronization signaling carried on a PSSCH fails to be received within a second time period; and that the second synchronization signaling carried on at least one PSBCH is received within a third time period and received power of the at least one PSBCH is greater than or equal to a third threshold value.

To be specific, in the embodiments of the present disclosure, the first terminal performs the synchronization operation as follows. The first terminal performs synchronization with a terminal transmitting a second PSBCH, the second PSBCH is a PSBCH carrying the second synchronization signaling, received power of the second PSBCH is greater than or equal to the third threshold value, and the second PSBCH has a highest synchronization level in a plurality of PSBCHs whose received power is greater than or equal to the third threshold value.

As an optional implementation, the synchronization method further includes, in the case that the first terminal is in the first synchronization state or the second synchronization state, a GNSS signal fails to be received within a fourth time period, the first synchronization signaling carried on a PSSCH fails to be received within a fifth time period and the second synchronization signaling carried on a PSBCH fails to be received within a sixth time period, the first terminal switches to an out-of-synchronization state.

In the embodiments of the present disclosure, in the case that the GNSS signal, the first synchronization signaling carried on the PSSCH and the second synchronization signaling carried on the PSBCH fail to be received, the first terminal determines that a synchronization timeout occurs and then enters the out-of-synchronization state.

As an optional implementation, the synchronization method further includes: in the case that the first terminal is in an out-of-synchronization state or the first synchronization state and a GNSS signal has been received, performing, by the first terminal, synchronization with the GNSS signal, and the first terminal switching to the second synchronization state; or in the case that the first terminal is in the second synchronization state and the GNSS signal has been received, performing, by the first terminal, synchronization with the GNSS signal.

In other words, in the case that the synchronization source of the first terminal is the GNSS signaling, the first terminal directly enters the second synchronization state, or the first terminal in the second synchronization state performs synchronization with the GNSS signal so as to maintains in the second synchronization state.

As an optional implementation, in the case that the first terminal is in the first synchronization state and a second condition has been met, the first terminal performs the synchronization operation. The second condition includes: that the GNSS signal fails to be received within a seventh time period; that the first synchronization signaling carried on the PSSCH fails to be received within an eighth time period; and that the second synchronization signaling carried on at least one PSBCH fails to be received within a ninth time period and received power of the at least one PSBCH is greater than or equal to a fifth threshold value.

Identically, in the embodiments of the present disclosure, the first terminal performs the synchronization operation as follows. The first terminal performs synchronization with the terminal transmitting a third PSBCH, the third PSBCH is a PSBCH carrying the second synchronization signaling, received power of the third PSBCH is greater than or equal to the fifth threshold value, and the third PSBCH has a highest synchronization level in a plurality of PSBCHs whose received power is greater than or equal to the fifth threshold value.

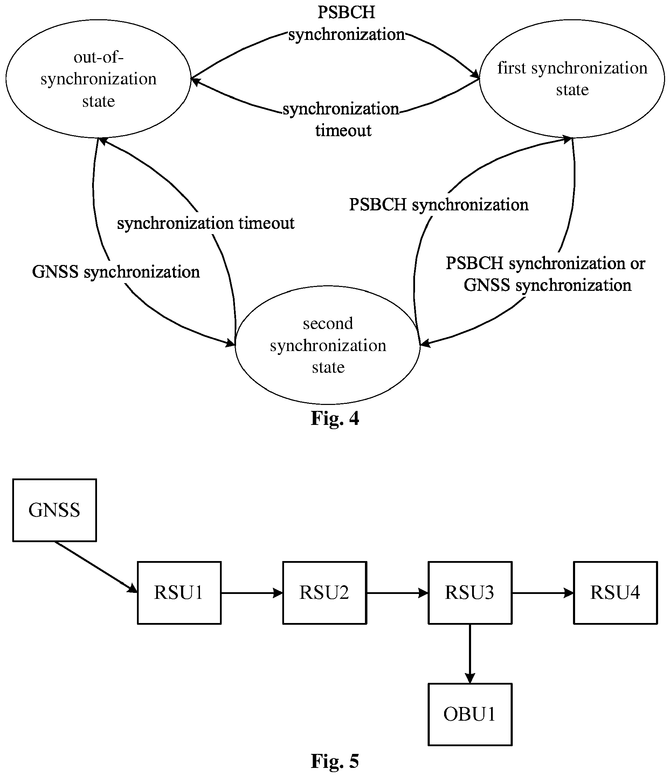

As shown in Fig. 4, in the synchronization method according to an embodiment of the present disclosure, the first terminal switches among the out-of-synchronization state, the first synchronization state and the second synchronization state, and the first terminal enters the out-of-synchronization state after it is powered on. A switching process among the three states will be described hereinafter. The first terminal in the out-of-synchronization performs synchronization with the terminal transmitting the second synchronization signaling carried on the PSBCH, and it switches to the first synchronization state. The first terminal in the out-of-synchronization state performs synchronization with the GNSS signal, and it switches to the second synchronization state. The first terminal in the first synchronization state switches to the out-of-synchronization state in the case that of synchronization timeout. The first terminal in the first synchronization state performs synchronization with the terminal transmitting the first synchronization signaling carried on the PSSCH, or performs synchronization with the GNSS signaling, and then it switches to the second synchronization state. The first terminal in the first synchronization state performs synchronization with the terminal transmitting the second synchronization signaling carried on the PSBCH, and it is maintained in the first synchronization state. The first terminal in the second synchronization state performs synchronization with the terminal transmitting the second synchronization signaling carried on the PSBCH, and it switches to the first synchronization state. The first terminal in the second synchronization state performs synchronization with the terminal transmitting the first synchronization signaling carried on the PSSCH, or performs synchronization with the GNSS signaling, and it is maintained in the synchronization state. The first terminal in the second synchronization state switches to the out-of-synchronization state in the case of synchronization timeout.

Here, it should be appreciated that, in the case of synchronization timeout, no synchronization operation is performed.

According to the synchronization method in the embodiments of the present disclosure, the first terminal performs the synchronization operation in accordance with the second synchronization signaling carried on the PSBCH and enters the first synchronization state, and then performs the synchronization operation in accordance with the first synchronization carried on the PSSCH so as to enter the second synchronization state. In this way, it is able to solve the problem in the related art where it is difficult to achieve the synchronization between the IoV terminals under the distributed IoV architecture. In addition, it is able to meet the industrial standard, and improve the applicability thereof. Moreover, the synchronization state is divided into the first synchronization state and the second synchronization state, so it is able to meet the requirements of different systems on the synchronization accuracy, and improve the synchronization accuracy.

A synchronization procedure for the synchronization method will be described hereinafter in conjunction with specific instances.

Here, system parameter configurations of the IoV devices, e.g., the RSU and the OBU, will be described as follows at first. A system bandwidth is 20MHz, the system supports a half duplexing mode, a subcarrier spacing is 15kHz, and a cyclic prefix (CP) has a length of $4.687\mu s$ (or $5.208\mu s$ (symbol 0)).

Fig. 5 shows a first scenario in which the synchronization method in the embodiments of the present disclosure is used. To be specific, there are 4 RSUs and 1 OBU in the first scenario, and merely an RSU1 has received the GNSS signal.

An initial state of each of the 4 RSUs and 1 OBU is the out-of-synchronization state, and after each of the 4 RSUs and 1 OBU is powered on, it searches for the GNSS signal at first but does not transmit any synchronization message.

The RSU1 receives the GNSS signal and enters the second synchronization state, with a synchronization level of 1. The RSU1 transmits the synchronization signaling through the PSBCH and the PSSCH, inCoverage in the second synchronization signaling carried on the PSBCH is 1, SLSS ID is 0, and the synchronization level in the first synchronization signaling carried on the PSSCH is 1.0.

An RSU2 at first receives from the RSU1 the second synchronization signaling carried on the PSBCH, and enters the first synchronization state, with a synchronization level of 2. The RSU2 transmits the second synchronization signaling through the PSBCH, inCoverage in the second synchronization signaling carried on the PSBCH and transmitted by the RSU2 is 0, and SLSS ID is 0. The RSU2 receives from the RSU1 the first synchronization signaling carried on the PSSCH, and enters the second synchronization state. The RSU2 transmits the synchronization signaling through the PSBCH and the PSSCH, the synchronization level in the second synchronization signaling carried on the PSBCH is 1, inCoverage is 1, SLSS ID is 0, and the synchronization level in the first synchronization signaling carried on the PSSCH is 1.1.

An RSU3 at first receives from the RSU2 the second synchronization signaling carried on the PSBCH, and enters the first synchronization state, with a synchronization level of 2. The RSU3 transmits the second synchronization signaling through the PSBCH, inCoverage in the second synchronization signaling carried on the PSBCH and transmitted by the RSU3 is 0, and SLSS ID is 0. The RSU3 receives from the RSU2 the first synchronization signaling carried on the PSSCH, and enters the second synchronization state. The RSU3 transmits the synchronization signaling through the PSBCH and the PSSCH, the synchronization level in the second synchronization signaling carried on the PSBCH is 1, inCoverage is 1, SLSS ID is 0, and the synchronization level in the first synchronization signaling carried on the PSSCH is 1.2.

An RSU4 at first receives from the RSU3 the second synchronization signaling carried on the PSBCH, and enters the first synchronization state, with a synchronization level of 2. The RSU4 transmits the second synchronization signaling through the PSBCH, inCoverage in the second synchronization signaling carried on the PSBCH is 0, and SLSS ID is 0. The RSU4 receives the first synchronization signaling carried on the PSSCH from the RSU3, and enters the second synchronization state. The RSU4 transmits the synchronization signaling through the PSBCH and the PSSCH, the synchronization level in the second synchronization signaling carried on the PSBCH is 1, inCoverage is 1, SLSS ID is 0, and the synchronization level in the first synchronization signaling carried on the PSSCH is 1.3.

An OBU1 at first receives from the RSU3 the second synchronization signaling carried on the PSBCH, and enters the first synchronization state, with a synchronization level of 2. The OBU1 transmits the second synchronization signaling through the PSBCH, inCoverage in the second synchronization signaling carried on the PSBCH and transmitted by the OBU1 is 0, and SLSS ID is 0. The OBU1 receives from the RSU3 the first synchronization signaling carried on the PSSCH, and enters the second synchronization state. The OBU1 transmits the second synchronization signaling through the PSBCH, inCoverage in the second synchronization signaling carried on the PSBCH and transmitted by the OBU1 is 0, and SLSS ID is 0.

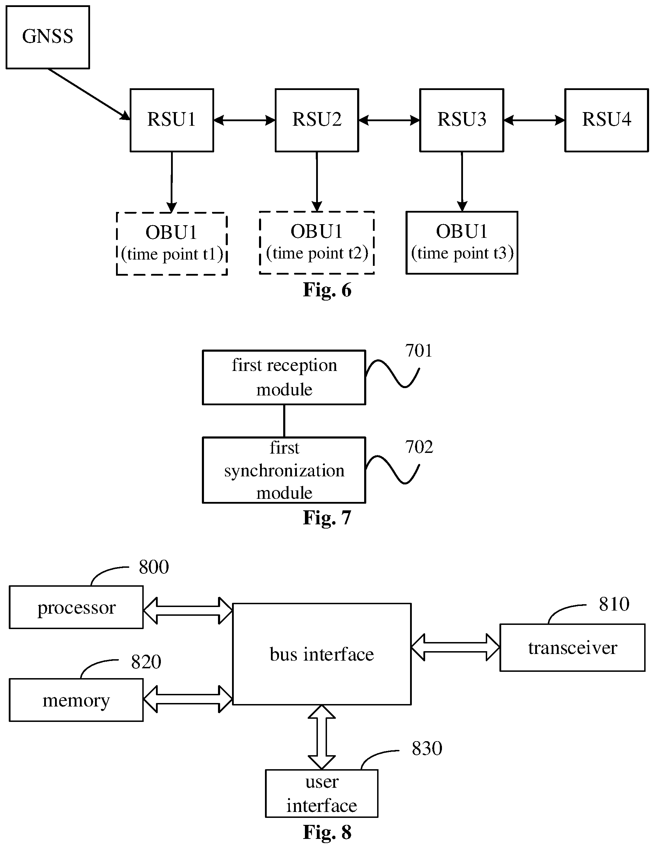

Fig. 6 shows a second scenario in which the synchronization method in the embodiments of the present disclosure is used. To be specific, there are 4 RSUs and 1 mobile OBU in the second scenario, and merely RSU1 to RSU4 have completed the synchronization and transmit the second synchronization signaling carried on the PSBCH and the first synchronization signaling carried on the PSSCH.

At a time point t1, an OBU1 receives from the RSU1 the second synchronization signaling carried on the PSBCH, and enters the first synchronization state, without transmitting any synchronization signaling. The OBU1 receives from the RSU2 the first synchronization signaling carried on the PSSCH, and enters the second synchronization state. At a time point t2, the OBU1 has already entered the synchronization state. At this time, the OBU1 receives from the RSU2 the first synchronization signaling carried on the PSSCH, and maintains in the second synchronization state. At a time point t3, the OBU1 receives from the RSU3 the second synchronization signaling carried on the PSSCH, and maintains in the synchronization state.

As shown in Fig. 7, the present disclosure further provides in some embodiments a synchronization device for a first terminal, which includes: a first reception module 701 configured to receive first synchronization signaling transmitted by at least one second terminal in the case that the first terminal is in a first synchronization state; and a first synchronization module 702 configured to perform a synchronization operation in accordance with the first synchronization signaling, and enable the first terminal to be switched to a second synchronization state.

According to the synchronization device in the embodiments of the present disclosure, in the case that the first terminal is in the first synchronization state, the first reception module 701 receives the first synchronization signaling transmitted by the at least one second terminal, and the first synchronization module 702 performs the synchronization operation in accordance with the first synchronization signaling and enables the first terminal to be switched to the second synchronization state. The first terminal performs the synchronization operation in accordance with the received first synchronization signaling so as to switch from the first synchronization state to the second synchronization state. As a result, it is able to achieve time synchronization between the IoV devices in the case of no coverage of a satellite signal, solve the problem in the related art where it is difficult to perform the synchronization among IoV terminals under IoV distributed architecture, and improve the synchronization accuracy of the terminal.

As an optional implementation, the first reception module 701 is specifically configured to receive the first synchronization signaling carried on a PSSCH.

As an optional implementation, the first reception module 701 is further configured to receive first indication information carried on a PSCCH, and the first indication information is used to indicate whether the first synchronization signaling is carried on the PSSCH.

As an optional implementation, the first synchronization module 702 is specifically configured to, when received power of the at least one PSSCH carrying the first synchronization signaling is greater than or equal to a first threshold value, perform the synchronization operation, and enable the first terminal to be switched to the second synchronization state.

As an optional implementation, the synchronization device further includes a second synchronization module configured to, in the case that the first terminal is in an out-of-synchronization state, receive second synchronization signaling carried on a PSBCH transmitted by at least one third terminal, and enable the first terminal to be switched to the first synchronization state or to be maintained in the out-of-synchronization state.

As an optional implementation, the synchronization device further includes a first determination module configured to, in the case that the first terminal is in the second synchronization state, determine that a first part of a synchronization level of the first terminal is a first value.

As an optional implementation, the synchronization device further includes a second determination module configured to: in the case that a synchronization source of the first terminal is a GNSS signal, determine that a second part of the synchronization level of the first terminal is a second value; and/or in the case that a value of a second part of a synchronization level carried in the first synchronization signaling transmitted by the synchronization source of the first terminal is n, determine that the second part of the synchronization level of the first terminal is n+1, where n≥0 and n is an integer.

As an optional implementation, the synchronization device further includes: a second reception module configured to, in the case that the first terminal is in the second synchronization state, receive the first synchronization signaling carried on at least one PSSCH; and a third synchronization module configured to perform the synchronization operation in accordance with the first synchronization signaling carried on the PSSCH. Received power of the at least one PSSCH is greater than or equal to a second threshold value.

As an optional implementation, the first synchronization signaling includes at least one of: a first part of a synchronization level; a second part of the synchronization level; a Sidelink radio frame number; a sidelink subframe number; a UTC; a first timing offset, the first timing offset being a timing offset of a terminal transmitting the first synchronization signaling relative to a reference time; an ID of the terminal transmitting the first synchronization signaling; a first timing adjustment value, the first timing adjustment value being an adjustment value when synchronization is performed between the terminal transmitting the first synchronization signaling and a synchronization source of the terminal; or a second timing offset and an ID of a terminal corresponding to the second timing offset, the second timing offset being a timing offset of the terminal transmitting the first synchronization signaling relative to another terminal.

As an optional implementation, the first synchronization module or the third synchronization module is configured to: determine a third timing offset of the first terminal relative to the terminal transmitting the first synchronization signaling in accordance with the received first synchronization signaling; determine the second timing adjustment value of the first terminal when the first synchronization signaling is being received; determine, in accordance with the second timing offset, the first timing adjustment value, the second timing adjustment value and the third timing offset, an real timing offset of the first terminal relative to the terminal transmitting the first synchronization signaling; and perform the synchronization operation in accordance with the real timing offset.

As an optional implementation, when determining, in accordance with the second timing offset, the first timing adjustment value, the second timing adjustment value and the third timing offset, the real timing offset of the first terminal relative to the terminal transmitting the first synchronization signaling, the first synchronization module or the third synchronization module is specifically configured to calculate the real timing offset of the first terminal relative to the

$$Rt_{xy} = \frac{\left(Ta_{xy} - Ta_{yx} - Td_x + Td_y - \Delta t_{xy} + \Delta t_{yx}\right)}{2}$$

terminal transmitting the first synchronization signaling through                                                                                                ,

where x represents the first terminal, y represents the terminal transmitting the first synchronization signaling, $Rt_{xy}$ represents the real timing offset of the first terminal relative to the terminal transmitting the first synchronization signaling, $Ta_{yx}$ represents the second timing offset, $Ta_{xy}$ represents the third timing offset, $Td_x$ represents the second timing adjustment value, $Td_y$ represents the first timing adjustment value, $\Delta t_{yx}$ represents a timing measurement error of the terminal transmitting the first synchronization signaling, and $\Delta t_{xy}$ represents a timing measurement error of the first terminal.

As an optional implementation, each of the first synchronization module and the third synchronization module is specifically configured to: determine a third timing offset of the first terminal relative to the terminal transmitting the first synchronization signaling in accordance with the received first synchronization signaling; obtain the first timing offset and the first timing adjustment value in the first synchronization signaling; determine an offset of the first terminal relative to the reference time in accordance with the third timing offset, the first timing offset and the first timing adjustment value; and perform the synchronization operation in accordance with the offset of the first terminal relative to the reference time.

As an optional implementation, the synchronization device further includes a fourth synchronization module configured to, in the case that the first terminal is in the second synchronization state and a first condition has been met, perform the synchronization operation, and enable the first terminal to be switched to the first synchronization state. The first condition includes that a GNSS signal fails to be received within a first time period; that the first synchronization signaling carried on a PSSCH fails to be received within a second time period; and that the second synchronization signaling carried on at least one PSBCH is received within a third time period and received power of the at least one PSBCH is greater than or equal to a third threshold value.

As an optional implementation, the synchronization device further includes a switching module configured to, in the case that the first terminal is in the first synchronization state or the second synchronization state, a GNSS signal fails to be received within a fourth time period, the first synchronization signaling carried on a PSSCH fails to be received within a fifth time period and the second synchronization signaling carried on a PSBCH fails to be received within a sixth time period, enable the first terminal to be switched to an out-of-synchronization state.

As an optional implementation, the synchronization device further includes a fifth synchronization module configured to: in the case that the first terminal is in an out-of-synchronization state or the first synchronization state and a GNSS signal has been received, perform synchronization with the GNSS signal, and the first terminal switching to the second synchronization state; or in the case that the first terminal is in the second synchronization state and the GNSS signal has been received, perform synchronization with the GNSS signal.

It should be appreciated that, the above modules are divided merely on the basis of their logic functions, and in actual use, they may be completely or partially integrated into a physical entity, or physically separated from each other. These modules may be implemented by calling software through a processing element, or implemented in the form of hardware. For example, the first reception module may be a processing element arranged separately, or integrated into a chip of the above-mentioned device. In addition, it may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

As shown in Fig. 8, the present disclosure further provides a terminal, which is a first terminal and includes a transceiver 810, a memory 820, a processor 800, and a computer program stored in the memory and used to be executed by the processor 800. The transceiver 810 is coupled to the processor 800 and the memory 820 through a bus interface. The processor 800 is configured to read the computer program in the memory 820 so as to: receive first synchronization signaling transmitted by at least one second terminal in the case that the first terminal is in a first synchronization state; and perform a synchronization operation in accordance with the first synchronization signaling, and enable the first terminal to be switched to a second synchronization state.

It should be appreciated that, in Fig. 8, bus architecture may include a number of buses and bridges connected to each other, so as to connect various circuits for one or more processors 800 and one or more memories 820. In addition, as is known in the art, the bus architecture may be used to connect any other circuits, such as a circuit for a peripheral device, a circuit for a voltage stabilizer and a power management circuit. The bus interface may be provided, and the transceiver 810 may consist of a plurality of elements, i.e., a transmitter and a receiver for communication with any other devices over a transmission medium. With respect to different terminals, a user interface 830 is also provided for devices which are to be arranged inside or outside the terminal, and these devices may include but not limited to a keypad, a display, a speaker, a microphone and a joystick. The processor 800 may take charge of managing the bus architecture as well as general processings. The memory 820 may store therein data for the operation of the processor 800.

According to the terminal in the embodiments of the present disclosure, the processor 800 reads the computer program in the memory 820, so as to: in the case that the first terminal is in the first synchronization state, receive the first synchronization signaling transmitted by the at least one second terminal; and perform the synchronization operation in accordance with the first synchronization signaling, and enable the first terminal to be switched to the second synchronization state. The first terminal performs the synchronization operation in accordance with the received first synchronization signaling so as to switch from the first synchronization state to the second synchronization state. As a result, it is able to achieve time synchronization between the IoV devices in the case of no coverage of a satellite signal, solve the problem in the related art where it is difficult to perform the synchronization among IoV terminals under IoV distributed architecture, and improve the synchronization accuracy of the terminal.

Here, it should be appreciated that, the terminal in the embodiments of the present disclosure is used to implement the above-mentioned synchronization method with a same technical effect, which will not be particularly defined herein.

It should be appreciated that, all of, or parts of, the steps may be implemented through hardware, or implemented through relevant hardware under the control of a computer program. The computer program may include instructions for executing parts of, or all of, the steps of the method, and it may be stored in a computer-readable storage medium in any form.

The present disclosure further provides in some embodiments a computer-readable storage medium storing therein a computer program. The computer program is used to be executed by a processor to implement the above-mentioned synchronization method with a same technical effect. The computer-readable storage medium may be a volatile or nonvolatile storage medium, e.g., Read Only Memory (ROM), Random Access Memory (RAM), magnetic disc or optical disc.

It should be further appreciated that, according to the device and the method in the embodiments of the present disclosure, the members and/or steps may be subdivided and/or recombined, which shall also be deemed as equivalents of the present disclosure. In addition, the steps for executing the above-mentioned processings may be performed in a chronological order. Of course, some steps may also be performed in parallel, or independently of each other. It should be further appreciated that, after reading the descriptions of the present disclosure, it is able for a person skilled in the art, using a basic programming skill, to implement any or all steps of the method and any or all members of the device in any computing device (including a processor and a storage medium) or a network consisting of the computing devices, in the form of hardware, firmware, software or a combination thereof.

Hence, the purposes of the present disclosure may also be implemented by one program or a set of programs running on any computing device, e.g., a known general-purpose computer, or implemented merely by a program product including programs codes capable of implementing the method or device. In other words, this program product and a storage medium storing therein the program product also constitute a part of the present disclosure. Obviously, the storage medium may be any known storage medium or a storage medium that may occur in future.

It should be further appreciated that, such words as "first" and "second" are merely used to separate one entity or operation from another entity or operation, but are not necessarily used to represent or imply any relation or order between the entities or operations. In addition, such terms as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

The above are the preferred embodiments of the present disclosure. It should be noted that a person skilled in the art can also make various improvements and modifications without departing from the principles described in the present disclosure. These improvements and modifications should also be regarded as falling within the protection scope of the present disclosure.

**Claims**

1. A synchronization method for a first terminal, comprising:

    receiving, by the first terminal, first synchronization signaling transmitted by at least one second terminal in the case that the first terminal is in a first synchronization state; and
    performing, by the first terminal, a synchronization operation in accordance with the first synchronization signaling, and the first terminal switching to a second synchronization state.

2. The synchronization method according to claim 1, wherein the receiving the first synchronization signaling transmitted by the at least one second terminal comprises:
    receiving the first synchronization signaling carried on a Physical Sidelink Shared Channel (PSSCH).

3. The synchronization method according to claim 2, further comprising:
    receiving first indication information carried on a Physical Sidelink Control Channel (PSCCH), wherein the first indication information is used to indicate whether the first synchronization signaling is carried on the PSSCH.

4. The synchronization method according to claim 2, wherein the performing, by the first terminal, the synchronization operation in accordance with the first synchronization signaling and the first terminal switching to the second synchronization state comprises:
when received power of the at least one PSSCH carrying the first synchronization signaling is greater than or equal to a first threshold value, performing, by the first terminal, the synchronization operation, and the first terminal switching to the second synchronization state.

5. The synchronization method according to claim 1, further comprising:
in the case that the first terminal is in an out-of-synchronization state, receiving second synchronization signaling that is carried on a Physical Sidelink Broadcast Channel (PSBCH) and transmitted by at least one third terminal, and the first terminal switching to the first synchronization state or maintaining in the out-of-synchronization state.

6. The synchronization method according to claim 1, further comprising:
in the case that the first terminal is in the second synchronization state, determining that a first part of a synchronization level of the first terminal is a first value.

7. The synchronization method according to claim 6, further comprising:

in the case that a synchronization source of the first terminal is a Global Navigation Satellite System (GNSS) signal, determining that a second part of the synchronization level of the first terminal is a second value; and/or
in the case that a value of a second part of a synchronization level carried in the first synchronization signaling transmitted by the synchronization source of the first terminal is n, determining that the second part of the synchronization level of the first terminal is n+1, where n≥0 and n is an integer.

8. The synchronization method according to claim 1, further comprising:

in the case that the first terminal is in the second synchronization state, receiving the first synchronization signaling carried on at least one PSSCH;
performing, by the first terminal, the synchronization operation in accordance with the first synchronization signaling carried on the PSSCH,
wherein received power of the at least one PSSCH is greater than or equal to a second threshold value.

9. The synchronization method according to claim 1 or 8, wherein the first synchronization signaling comprises at least one of:

a first part of a synchronization level;
a second part of the synchronization level;
a Sidelink radio frame number;
a sidelink subframe number;
a Universal Time Coordinated (UTC);
a first timing offset, the first timing offset being a timing offset of a terminal transmitting the first synchronization signaling relative to a reference time;
an Identity (ID) of the terminal transmitting the first synchronization signaling;
a first timing adjustment value, the first timing adjustment value being an adjustment value when synchronization is performed between the terminal transmitting the first synchronization signaling and a synchronization source of the terminal; or
a second timing offset and an ID of a terminal corresponding to the second timing offset, the second timing offset being a timing offset of the terminal transmitting the first synchronization signaling relative to another terminal.

10. The synchronization method according to claim 9, wherein the performing, by the first terminal, the synchronization operation comprises:

determining, in accordance with the received first synchronization signaling, a third timing offset of the first terminal relative to the terminal transmitting the first synchronization signaling;
determining the second timing adjustment value of the first terminal when the first synchronization signaling is being received;

determining, in accordance with the second timing offset, the first timing adjustment value, the second timing adjustment value and the third timing offset, an real timing offset of the first terminal relative to the terminal transmitting the first synchronization signaling;

performing, by the first terminal, the synchronization operation in accordance with the real timing offset.

11. The synchronization method according to claim 10, wherein the determining, in accordance with the second timing offset, the first timing adjustment value, the second timing adjustment value and the third timing offset, the real timing offset of the first terminal relative to the terminal transmitting the first synchronization signaling comprises:

calculating the real timing offset of the first terminal relative to the terminal transmitting the first synchronization

$$Rt_{xy} = \frac{\left(Ta_{xy} - Ta_{yx} - Td_x + Td_y - \Delta t_{xy} + \Delta t_{yx}\right)}{2}$$

signaling through a formula ,

where x represents the first terminal, y represents the terminal transmitting the first synchronization signaling, $Rt_{xy}$ represents the real timing offset of the first terminal relative to the terminal transmitting the first synchronization signaling, $Ta_{yx}$ represents the second timing offset, $Ta_{xy}$ represents the third timing offset, $Td_x$ represents the second timing adjustment value, $Td_y$ represents the first timing adjustment value, $\Delta t_{yx}$ represents a timing measurement error of the terminal transmitting the first synchronization signaling, and $\Delta t_{xy}$ represents a timing measurement error of the first terminal.

12. The synchronization method according to claim 9, wherein the performing, by the first terminal, the synchronization operation comprises:

determining, in accordance with the received first synchronization signaling, a third timing offset of the first terminal relative to the terminal transmitting the first synchronization signaling;

obtaining the first timing offset and the first timing adjustment value in the first synchronization signaling;

determining an offset of the first terminal relative to the reference time in accordance with the third timing offset, the first timing offset and the first timing adjustment value;

performing, by the first terminal, the synchronization operation in accordance with the offset of the first terminal relative to the reference time.

13. The synchronization method according to claim 1, further comprising:

in the case that the first terminal is in the second synchronization state and a first condition has been met, performing, by the first terminal, the synchronization operation, and the first terminal switching to the first synchronization state,

wherein the first condition comprises:

that a GNSS signal fails to be received within a first time period;

that the first synchronization signaling carried on a PSSCH fails to be received within a second time period;

that the second synchronization signaling carried on at least one PSBCH is received within a third time period, and received power of the at least one PSBCH is greater than or equal to a third threshold value.

14. The synchronization method according to claim 1, further comprising:

in the case that the first terminal is in the first synchronization state or the second synchronization state, a GNSS signal fails to be received within a fourth time period, the first synchronization signaling carried on a PSSCH fails to be received within a fifth time period, and the second synchronization signaling carried on a PSBCH fails to be received within a sixth time period, the first terminal switches to an out-of-synchronization state.

15. The synchronization method according to claim 1, further comprising:

in the case that the first terminal is in an out-of-synchronization state or the first synchronization state, and a GNSS signal has been received, performing, by the first terminal, synchronization with the GNSS signal, and the first terminal switching to the second synchronization state; or

in the case that the first terminal is in the second synchronization state, and the GNSS signal has been received, performing, by the first terminal, synchronization with the GNSS signal.

16. A terminal, the terminal being a first terminal and comprising a transceiver, a memory, a processor, and a computer program stored in the memory and used to be executed by the processor, wherein the processor is configured to execute the computer program to implement the synchronization method according to any one of claims 1 to 15.

17. A synchronization device for a first terminal, comprising:

a first reception module, configured to receive first synchronization signaling transmitted by at least one second terminal in the case that the first terminal is in a first synchronization state;
a first synchronization module, configured to perform a synchronization operation in accordance with the first synchronization signaling, and enable the first terminal to be switched to a second synchronization state.

18. A computer-readable storage medium storing therein a computer program, wherein the computer program is used to be executed by a processor to implement the synchronization method according to any one of claims 1 to 15.

receiving, by the first terminal, first synchronization signaling transmitted by at least one second terminal in the case that the first terminal is in a first synchronization state

101

performing, by the first terminal, a synchronization operation in accordance with the first synchronization signaling, and the first terminal switching to a second synchronization state

102

**Fig. 1**

transmitting first synchronization signaling | timing adjustment | transmitting first synchronization signaling | timing adjustment

t

**Fig. 2**

Tx

((•))

Ty

((•))

$L_{xy}$

x

y

**Fig. 3**

**Fig. 4**

**Fig. 5**

GNSS

RSU1 ↔ RSU2 ↔ RSU3 ↔ RSU4

OBU1
(time point t1)

OBU1
(time point t2)

OBU1
(time point t3)

**Fig. 6**

first reception
module — 701

first
synchronization
module — 702

**Fig. 7**

— 800
processor

bus interface

— 810
transceiver

— 820
memory

— 830
user
interface

**Fig. 8**

## INTERNATIONAL SEARCH REPORT

International application No.

**PCT/CN2022/100099**

| | |
|---|---|
| **A.** | **CLASSIFICATION OF SUBJECT MATTER** |

H04W 4/40(2018.01)i

According to International Patent Classification (IPC) or to both national classification and IPC

| | |
|---|---|
| **B.** | **FIELDS SEARCHED** |

Minimum documentation searched (classification system followed by classification symbols)

H04W 4/-; H04W 56/-

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 百度学术, BAIDU SCHOLAR: 同步, 直通链路, 旁链路, 侧行链路, 侧边链路, 侧链路, 旁行链路, 旁路链路, 副链路, 失步 VEN; WOTXT; USTXT; EPTXT; IEEE; 3GPP: synchron+, side link, V2X, PSBCH, PSSCH, PSCCH

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 112822771 A (GOHIGH DATA NETWORKS TECHNOLOGY CO., LTD.) 18 May 2021 (2021-05-18)<br>description, paragraphs [0081]-[0134] | 1, 5, 15-18 |
| Y | CN 112822771 A (GOHIGH DATA NETWORKS TECHNOLOGY CO., LTD.) 18 May 2021 (2021-05-18)<br>description, paragraphs [0081]-[0134] | 2-4, 6-14 |
| Y | CN 107005958 A (HUAWEI TECHNOLOGIES CO., LTD.) 01 August 2017 (2017-08-01)<br>description, paragraphs [0235]-[0238] | 2-4, 6-14 |
| A | CN 106686714 A (CHINA ACADEMY OF TELECOMMUNICATIONS TECHNOLOGY) 17 May 2017 (2017-05-17)<br>entire document | 1-18 |
| A | WO 2020142999 A1 (MEDIATEK SINGAPORE PTE. LTD.) 16 July 2020 (2020-07-16)<br>entire document | 1-18 |
| A | WO 2020033795 A1 (IDAC HOLDINGS, INC.) 13 February 2020 (2020-02-13)<br>entire document | 1-18 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2022** | **22 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/100099** |

**C.** DOCUMENTS CONSIDERED TO BE RELEVANT

| Category* | Citation of document, with indication, where appropriate, of the relevant passages | Relevant to claim No. |
| --- | --- | --- |
| A | US 2021051617 A1 (QUALCOMM INC.) 18 February 2021 (2021-02-18) entire document | 1-18 |
| A | Huawei et al. "3GPP TSG RAN WG1 Meeting #85 R1-164105 "Sidelink synchronization enhancement in V2V communication"" *3GPP tsg_ran\WG1_RL1*, 14 May 2016 (2016-05-14), entire document | 1-18 |

Form PCT/ISA/210 (second sheet) (January 2015)

**INTERNATIONAL SEARCH REPORT**
Information on patent family members

International application No.

**PCT/CN2022/100099**

| Patent document cited in search report | | | Publication date (day/month/year) | Patent family member(s) | | | Publication date (day/month/year) |
|---|---|---|---|---|---|---|---|
| CN | 112822771 | A | 18 May 2021 | None | | | |
| CN | 107005958 | A | 01 August 2017 | KR | 20180049030 | A | 10 May 2018 |
| | | | | US | 2018213500 | A1 | 26 July 2018 |
| | | | | WO | 2017049521 | A1 | 30 March 2017 |
| | | | | US | 2021014817 | A1 | 14 January 2021 |
| | | | | EP | 3340699 | A1 | 27 June 2018 |
| | | | | EP | 3340699 | A4 | 05 September 2018 |
| | | | | JP | 2018528702 | W | 27 September 2018 |
| | | | | CN | 107005958 | B | 26 June 2020 |
| | | | | KR | 102147713 | B1 | 25 August 2020 |
| | | | | US | 10820288 | B2 | 27 October 2020 |
| | | | | CN | 111867043 | A | 30 October 2020 |
| | | | | CN | 111867044 | A | 30 October 2020 |
| | | | | JP | 2020195157 | A | 03 December 2020 |
| | | | | JP | 6798668 | B2 | 09 December 2020 |
| | | | | CN | 111867044 | B | 30 November 2021 |
| | | | | JP | 7032495 | B2 | 08 March 2022 |
| CN | 106686714 | A | 17 May 2017 | WO | 2017076195 | A1 | 11 May 2017 |
| | | | | CN | 106686714 | B | 26 July 2019 |
| WO | 2020142999 | A1 | 16 July 2020 | None | | | |
| WO | 2020033795 | A1 | 13 February 2020 | None | | | |
| US | 2021051617 | A1 | 18 February 2021 | WO | 2021030546 | A2 | 18 February 2021 |
| | | | | EP | 4014603 | A2 | 22 June 2022 |
| | | | | CN | 114208313 | A | 18 March 2022 |
| | | | | WO | 2021030546 | A3 | 25 March 2021 |
| | | | | IN | 202227001832 | A | 13 May 2022 |

Form PCT/ISA/210 (patent family annex) (January 2015)

**REFERENCES CITED IN THE DESCRIPTION**

**Patent documents cited in the description**

- CN 202110800778